Europäisches Patentamt

European Patent Office

Office européen des brevets

(19)

(11) **EP 1 288 169 A1**

(12) **EUROPÄISCHE PATENTANMELDUNG**

(43) Veröffentlichungstag:
05.03.2003 Patentblatt 2003/10

(51) Int Cl.⁷: **C03C 3/06**, C03C 23/00,
C03B 32/00

(21) Anmeldenummer: 02019291.0

(22) Anmeldetag: 28.08.2002

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **30.08.2001 DE 10142861**

(71) Anmelder:
• **Schott Glas**
**55122 Mainz (DE)**
• **CARL-ZEISS-STIFTUNG**
**trading as SCHOTT GLAS**
**55122 Mainz (DE)**

(72) Erfinder:
• **Martin, Rolf**
**07743 Jena (DE)**
• **Von der Gönna, Gordon, Dr.**
**07749 Jena (DE)**

(74) Vertreter: **Däsch, Götz, Dipl.-Ing., Patentanwalt
Patentanwaltsbüro Pfeiffer & Partner,
Winzerlaer Strasse 10
07745 Jena (DE)**

(54) **Verfahren zur Wasserstoffbeladung von Quarzglaskörpern zur Verbesserung der Brechzahlhomogenität und der Laserfestigkeit bei gleichzeitiger Einhaltung einer vorgegebenen Spannungsdoppelbrechung und danach hergestellte Quarzglaskörper**

(57) Die Erfindung betrifft die Wasserstoffbeladung von Quarzglaskörpern in einem Temperprozess in einem Ofen zur Verbesserung der Brechzahlhomogenität und Laserfestigkeit bei gleichzeitiger Einhaltung einer vorgegebenen Spannungsdoppelbrechung jedes Quarzglaskörpers. Zunächst werden die Brechzahlverteilung, die Spannungsdoppelbrechung, die Wasserstoffverteilung und die auszugleichenden Brechzahlunterschiede im jeweiligen Quarzglaskörper bestimmt und danach die zum Brechzahlausgleich notwendige Wasserstoffveränderung ermittelt. Weiterhin werden die Temper-Temperatur und ihre Haltezeit sowie die Wasserstoffkonzentration und der Wasserstoffdruck im Ofen eingestellt, um zu einer hinreichend ausgeglichenen Brechzahlverteilung zu gelangen.

EP 1 288 169 A1

## Beschreibung

Die Erfindung betrifft ein Verfahren zur Wasserstoffbeladung von Quarzglaskörpern zur Verbesserung der Brechzahlhomogenität und der Laserfestigkeit bei gleichzeitiger Einhaltung einer vorgegebenen Spannungsdoppelbrechung und danach hergestellte Quarzglaskörper. Bei dem verwendeten Quarzglas handelt es sich um ein hochhomogenes synthetisches Quarzglas, das in optischen Systemen für die Mikrolithografie eingesetzt wird. Dieses Quarzglas wird von den Glasherstellern als Halbzeug (Blank) zumeist in Form von Rundscheiben an die Linsenhersteller geliefert. Die Form des Quarzglases kann aber auch im Grundriss eckig sein und eine Höhe haben, die vorzugsweise kleiner als die Seitenlänge bzw. der Durchmesser im Grundriss ist. Um aus den Blanks Linsen für optische Systeme der Mikrolithografie herstellen zu können, müssen gewisse vorgegebene Spezifikationen erfüllt werden. Dabei wird für ausgewählte Werkstoffeigenschaften, insbesondere deren zulässige Schwankung der Eigenschaftswerte in diesem Blank festgelegt. So spezifizierte Blanks sind Voraussetzung für die Herstellung von Linsen vorgegebener Abbildungsgüte. Wichtige Anforderungen an diese Blanks sind:

- konstante örtliche Brechzahl (hohe Brechzahlhomogenität),
- niedrige und örtlich gleichmäßige Spannungsdoppelbrechung (SDB),
- hohe zeitliche Konstanz aller optischen Eigenschaften bei Durchstrahlung der Blanks (bzw. der daraus hergestellten Linsen) mit Laserlicht, insbesondere der Wellenlängen 193 nm (ArF-Laser) und 248 nm (KrF-Laser). Hierbei spielt eine möglichst geringe laserinduzierte Absorption (LIA), d.h. die Zunahme der Absorption von Laserlichtenergie bei längerer Laserbestrahlung eine wichtige Rolle.

Eine hohe Brechzahlhomogenität in einem Blank setzt eine örtlich (partiell) konstante chemische Zusammensetzung und eine konstante Glasstruktur voraus. Wichtige Einflußgrößen auf die Brechzahlhomogenität sind Störungen der chemischen Zusammensetzung durch örtliche Schwankungen des Gehalts an molekularem Wasserstoff ($H_2$), welcher sich in den Strukturzwischenräumen befindet und im wesentlichen nicht in die Glasstruktur eingebunden ist, und örtlich schwankendem Gehalt an Si-OH, als eingebautem Strukturfehler. Beide Fehler führen zu örtlichen Brechzahlschwankungen beim Durchgang einer Lichtwelle durch das Blank.
Niedrige und örtlich gleichmäßige Spannungsdoppelbrechung wird dann erreicht, wenn durch gute Entspannung (Kühlung) und gleichmäßige Verteilung der chemischen Zusammensetzung und der Strukturfehler im abgekühlten Blank möglichst keine mechanischen Spannungen mehr vorhanden sind. Diese noch vorhandenen mechanischen Spannungen bewirken nicht nur SDB, sondern beeinflussen über die photoelastischen Konstanten auch die Brechzahlhomogenität.
Eine geringe LIA setzt voraus, dass während der gesamten Einsatzzeit der aus dem Blank gefertigten Linse im optischen System die Konzentration absorbierender Defekte gering bleibt. Nach den derzeit gültigen physikalischen Modellen hängt die Anzahl dieser absorbierenden Defekte von der Anzahl sogenannter Vorläuferdefekte und der Anzahl der im Glas vorhandenen Wasserstoffmoleküle ab. Vorläuferdefekte können Störungen des idealen $SiO_2$-Netzwerks, wie gebrochene oder verspannte Si-O-Bindungen sein. Diese Vorläuferdefekte werden bei Laserbestrahlung in absorbierende Defekte umgewandelt. Dabei gibt es bei Laserbestrahlung im Quarzglas ein Gleichgewicht zwischen der Entstehung absorbierender Defekte und deren Umwandlung in nichtabsorbierende Defekte durch Anlagerung von Wasserstoff. Das Verhältnis von Vorläuferdefekten und molekularem Wasserstoff bestimmt also die LIA des Quarzglases. Für ausreichende Laserfestigkeit (geringe LIA) muß während der gesamten Einsatzzeit der aus dem Blank hergestellten Linse ein Mindestgehalt an molekularem Wasserstoff im Quarzglas vorhanden sein.
Zusammenfassend kann man sagen, dass für einen Blank aus synthetischem Quarzglas mit hoher Brechzahlhomogenität, geringer SDB und geringer LIA ein örtlich sehr gut ausgeglichener Si-OH-Gehalt und ein ebenfalls örtlich sehr gut ausgeglichener Gehalt von molekularem Wasserstoff auf einem Mindestniveau notwendig sind. Beim Flammenpyrolyseverfahren wird synthetisches Quarzglas in einer Knallgasflamme durch Oxidation von $SiCl_4$ zu $SiO_2$ hergestellt. Dabei entstehen im Quarzglas zwangsläufig:

- Vorläuferdefekte, welche bei Laserbestrahlung zu absorbierenden Defekten umgewandelt werden,
- örtliche Si-OH-Schwankungen,
- örtliche Schwankungen von molekularem Wasserstoff.

Eine Steuerung des Schmelzprozesses so, dass nach dem Schmelzen und Entspannen Blanks gefertigt werden können, welche die Spezifikation zum Einsatz in der Lithografie erfüllen, ist technisch und wirtschaftlich nicht immer möglich. Während der mittlere Gehalt und die örtliche Verteilung an Si-OH bei der Schmelze in etwa einstellbar sind, gelingen ein Mindestgehalt an Wasserstoff und ein hinreichend ausgeglichener Wasserstoffverlauf über den ganzen Durchmesser der Walze nicht. Erschwerend kommt dazu, dass sich schon bei der Schmelze und beim Entspannen der Quarzglaswalze (Kühlen) die Wasserstoffkonzentration durch Diffusion verringert und die örtliche Verteilung geändert wird.

Gemäß dem Stand der Technik werden nach einen bekannten Verfahren große Scheiben geschmolzen und entspannt, welche kleinere Bereiche ausreichender Qualität enthalten. Diese Bereiche werden durch Prüfung der Ausgangsscheibe ermittelt und dann aus dieser großen Scheibe herausgearbeitet. Aus diesen Bereichen werden danach die benötigten Blanks gefertigt. Ein Merkmal dieses Verfahrens ist ein Wasserstoffgehalt im Bereich von $1 \cdot 10^{17}$ bis $5 \cdot 10^{17}$ Molekülen/cm$^3$. In einem anderen Verfahren werden die geschmolzenen Walzen in einem nachfolgenden Prozessschritt so erwärmt, dass sie mechanisch verformbar sind. Durch Scherbewegungen in verschiedenen Richtungen wird die Walze so homogenisiert, dass daraus ebenfalls Blanks heraustrennbar sind, welche die benötigte Qualität aufweisen. Beim Homogenisieren und Entspannen verringert sich der Wasserstoffgehalt der Walze nochmals deutlich. Ein Merkmal dieses Verfahrens ist ein Wasserstoffgehalt im Bereich von $1 \cdot 10^{15}$ bis $1 \cdot 10^{16}$ Molekülen/cm$^3$. Bei beiden Verfahren entsteht also Material mit relativ geringem Wasserstoffgehalt. Beim nachträglichen Homogenisieren besteht die Gefahr einer hohen LIA insbesondere dadurch, dass der Gehalt an Vorschädigungen gleichbleibt, der Wasserstoffgehalt aber deutlich verringert wird.

Die Aufgabe der Erfindung besteht nun darin, den Wasserstoffgehalt in Blanks auf ein Mindestniveau zu erhöhen und/oder zu vergleichmäßigen. Das wird durch nachträgliches Tempern unter Wasserstoffatmosphäre erreicht. Mit anderen Worten ist es das Ziel der Erfindung

- den $H_2$-Gehalt im Blank zu erhöhen, um die LIA zu verringern, ohne dass sich Brechzahlhomogenität und SDB unzulässig verändern und
- den $H_2$-Gehalt im Blank günstig zu verändern, um die Brechzahlhomogenität zu verbessern, ohne dass sich die LIA und die SDB unzulässig verändern.

Gemäß der Erfindung wird die vorstehend aufgezeigte und detailliert dargestellte Aufgabe durch die kennzeichnenden Merkmale des ersten Patentanspruchs gelöst und durch die Kennzeichen der Unteransprüche 2 bis 8 präzisiert. Dabei ist zu beachten, dass die Bedingungen für die Wasserstoffaufnahme auch von der in Dezi-Pascal-Sekunden (dPas) gemessenen Viskosität des Quarzglases und diese wieder von seinem Gehalt an Wasser abhängen. Ein nach dem erfindungsgemäßen Verfahren hergestellter, hinsichtlich seiner Grundrissform beliebiger scheibenförmiger Quarzglaskörper ergibt sich nach den kennzeichnenden Merkmalen der Ansprüche 9 und 10.

Die Veränderung der Wasserstoffverteilung in Blanks aus Quarzglas erfolgt durch Diffusion. Dabei gleicht sich der Wasserstoffgehalt im Volumen des Blank an den Wasserstoffgehalt an der Blankoberfläche so lange an, bis beide ausgeglichen sind. Während dieses Ausgleichs verändert sich die Wasserstoffverteilung im Blank gemäß den physikalischen Gesetzen der Diffusion. Bei gegebener Geometrie und Anfangsverteilung des Wasserstoffs im Blank kann die Veränderung der Wasserstoffverteilung im Blank durch eine zeitliche Änderung des Wasserstoffgehaltes an der Blankoberfläche und durch die Temperatur des Blanks gesteuert werden. Das geschieht durch Tempern des Blanks in einem Ofen bei vorgegebener Ofentemperatur und vorgegebener chemischer Zusammensetzung der Ofenatmosphäre und Temperzeit. Die Ofenatmosphäre kann kontinuierlich von einer wasserstofffreien Atmosphäre (z. B. Luft) zu einer reinen Wasserstoffatrnosphäre ($H_2$-Gas) variiert werden. Für die Wasserstoffdiffusion in synthetischem Quarzglas mit einem mittleren Gehalt an Si-OH von 1100 bis 1300 Masse ppm wurden folgende Parameter in Versuchen ermittelt:

Temperaturabhängige Diffusionskonstante

$$D(T) = D_0 \cdot \exp(-E_a/(R.T)); [m^2/s] \qquad [1]$$

mit:

- $D_0 = 2 \times 10^{-7}$ m$^2$/s,
- $E_a$= 47,2 kJ/mol,
- R als Gaskonstante und
- T als absoluteTemperatur.

Die Wasserstoffkonzentration $CH_{ob}$ in der Blankoberfläche berechnet sich zu:

$$CH_{ob} = (F \cdot L \cdot P \cdot C_{hg})/(R \cdot T); [\text{Moleküle/cm}^3] \qquad [2]$$

Dabei sind:

- F ein experimentell zu F = 0,035 ermittelter Löslichkeitsfaktor,
- L die Loschmidtzahl,
- R die Gaskonstante,
- P der Ofendruck,
- T die absolute Temperatur und
- $C_{hg}$ die Wasserstoffkonzentration in der Ofenatmosphäre unter Normalbedingungen in [%/100]

In der vorstehenden Gleichung [2] sind die Größen P, $C_{hg}$ und einstellbar.

Für den Einfluß der Änderung der Wasserstoffverteilung auf die Änderung der Brechzahlhomogenität wurde im Versuch folgende mittlere Abhängigkeit ermittelt:

$$\Delta n/\Delta CH = 1,3 \ [ppm/ (10^{18} \ Moleküle/cm^3] \tag{3}$$

Dabei bedeuten:

- $\Delta n = (n(R) - n(0))$; Brechzahlunterschied zwischen Blankmitte (0) und Blankrand (R) [ppm]
- $\Delta CH = (CH (R) - CH(0))$; Unterschied des Wasserstoffgehaltes zwischen Blankmitte (0) und Blankrand (R) $[10^{18} \ Moleküle/cm^3]$

Dabei sind Absolutbrechzahl und Wasserstoffgehalt proportional, d.h. eine Erhöhung des Wasserstoffgehaltes führt zu einer Anhebung der Absolutbrechzahl.

Für den Einfluß der Änderung der Wasserstoffverteilung auf die Änderung der Spannungsdoppelbrechung wurde im Versuch folgende mittlere Abhängigkeit ermittelt:

$$\Delta SDB/\Delta CH = 0,2 \ [(nm/cm)/(10^{18} \ Moleküle/cm^3)] \tag{4}$$

Dabei bedeutet:

- $\Delta SDB = (SDB(R) - SDB(0))$; Unterschied der Spannungsdoppelbrechung zwischen Blankmitte (0) und Blankrand (R) [nm/cm].

Dabei sind der Meßwert der SDB und der Wasserstoffgehalt proportional, d.h. eine Erhöhung des Wasserstoffgehaltes an einer Stelle im Vergleich zu einer Referenzstelle führt zu einer Anhebung der SDB an dieser Stelle im Vergleich zur Referenzstelle.

Auf Grund der vorstehenden mathematischen Beziehungen, deren Gültigkeit bezüglich der Erfindung am Experiment nachgewiesen wurde, lässt sich folgendes sagen:

Um den Wasserstoffgehalt in einem Blank so zu erhöhen, dass sich die LIA verringert, ohne dass sich Brechzahlhomogenität und SDB unzulässig verändern, genügt die Einstellung einer Wasserstoffverteilung im Blank, die überall einen gegebenen Mindestwert erreicht und ausgeglichen genug ist, um Brechzahlhomogenität und SDB nicht unzulässig zu beeinflussen. Damit dieser Wert bei vertretbaren Prozesszeiten erreicht werden kann, müssen Ofentemperatur und Wasserstoffdruck so eingestellt werden, dass die o.g. Wasserstoffkonzentration am Rand des Blanks etwas größer ist, als der gegebene Mindestwert. Die Haltezeit für die Temperung ergibt sich aus der Blankgeometrie und dem Anfangsgehalt an Wasserstoff im Blank, sowie aus der Diffusionskonstanten nach der bekannten Differentialgleichung der Diffusion, die lautet:

$$dC/dt = D \cdot \Delta C,$$

worin

- C die Konzentration des molekularen Wasserstoffes und
- $\Delta$ ein Laplaceoperator

sind.

Um den $H_2$-Gehalt eines scheibenförmigen Quarzglaskörpers so zu verändern, dass sich die Brechzahlhomogenität verbessert, ohne daß sich die LIA und die SDB unzulässig verändern, wird folgendemaßen vorgegangen:

- Die Brechzahlverteilung, die SDB und die Wasserstoffverteilung der Rundscheibe werden gemessen und die auszugleichenden Brechzahlunterschiede werden festgestellt.
- Aus den oben genannten Berechnungsvorschriften über die Brechzahl- und SDB-Wirksamkeit von Wasserstoff wird die zum Brechzahlausgleich notwendige örtliche Wasserstofferhöhung ermittelt.
- Die Temperatur für die Wasserstoffbeladung wird zum einen so hoch gewählt, dass die Prozesszeit noch praktikabel bleibt und dass zum anderen keine weiteren unerwünschten Reaktionen (z. B. Erhöhung der SDB) stattfinden. Diese Temper-Temperatur kann unter Berücksichtigung der Viskosität des verwendet Quarzglases zwischen 573 K und 1173 K, vorzugsweise bei 773 K liegen. Die Viskosität beträgt bspw. $10^{14,5}$ dPas, wenn das Quarzglas ca. 1000 ppm OH-Gehalt hat.
- Liegt die Temper-Temperatur fest, werden Halte- oder Temperzeit und Wasserstoffdruck im Ofen so ermittelt, dass ausgehend von der Anfangskonzentration an Wasserstoff nach Temperende die gewünschte Wasserstoffverteilung vorliegt und die Brechzahlverteilung hinreichend ausgeglichen ist. Die Temperzeit liegt zwischen 10 h und 730 h, in die bis zu 10 h für Aufheizen und Abkühlen des Quarzglaskörpers eingeschlossen sein können. Der Wasserstoffdruck P im Ofen beträgt $0 < P \leq 20$ bar.
- Die Wasserstoffbeladung bei den o. g. Temperaturen wird dadurch beschränkt, dass bei zu hohen örtlichen Unterschieden der Wasserstoffkonzentration ($> 5 \cdot 10^{18}$ Moleküle/cm$^3$) die SDB einen zulässigen Wert überschreitet. Ein weiterer Brechzahlausgleich ist dann wegen zu hoher SDB nicht mehr möglich.
- Damit ergeben sich für jede Ausgangsscheibe angepasste optimale Beladungsbedingungen zur bestmöglichen Annäherung an das gesteckte Ziel.

Scheibenförmige Quarzglaskörper mit Durchmessern von 50 bis 350 mm und Dicken (Höhen) von 10 bis 100 mm, die nach nach dem erfindungsgemäßen Verfahren getempert wurden, weisen eine Wasserstoffkonzentration von 5 . $10^{17}$ Moleküle/cm$^3$, eine Spannungsdoppelbrechung $\leq 1$ nm/cm und eine Brechzahlhomogenität $\leq 1$ ppm auf.

Ausführungsbeispiele

1.Beispiel

Ein Blank in Form einer Rundscheibe hat einen Durchmesser von 200 mm und eine Dicke von 50 mm. Der (ausgeglichene) Anfangswasserstoffgehalt beträgt 1 . $10^{17}$ Moleküle/cm$^3$ und soll auf 5 . $10^{17}$ Moleküle/cm$^3$ angehoben werden. Das wird durch folgende Verfahrensschritte erreicht:

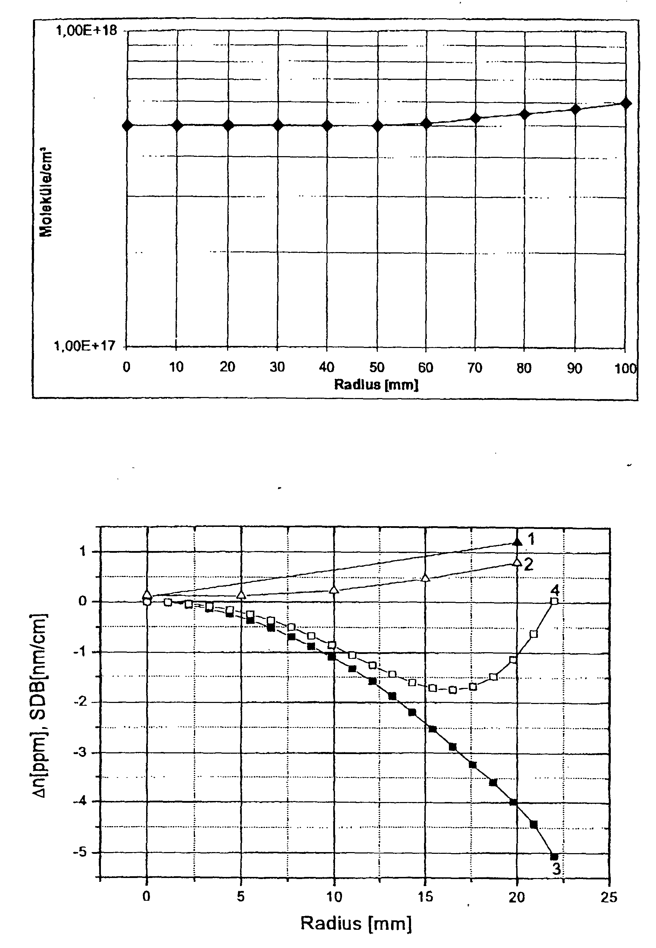

- Als Ofenatmosphäre wird reines Wasserstoffgas verwendet, d.h. $C_{hg} = 1$.
- Als Ofentemperatur wird T = 773 K gewählt. Um keine neuen Spannungen zu bilden, liegt die gewählte Ofentemperatur deutlich unter der Transformationstemperatur.
- Aus Gleichung [2] wird der Ofendruck P so berechnet, dass gilt: $CH_{ob} = 6 \cdot 10^{17}$ Moleküle/cm$^3$. Als Ergebnis erhält man P = 1,8 bar.
- Die gesuchte Temperzeit ergibt sich nun unter Berücksichtigung der Differentialgleichung der Diffusion von Wasserstoff in Quarzglas und unter Beachtung der o.g. Anfangs- und Randbedingungen. In die Berechnung gehen lineare Aufheiz- und Abkühlzeiten des Ofens von jeweils 5 Stunden (h) mit ein. Für dieses Beispiel ergibt sich eine Temperzeit t = 730 h. Die angegebene Wasserstoffverteilung $H_m(r)$ ist ein über die Dicke der Rundscheibe gemittelter Wert. Sie weist in der Scheibenmitte einen Wert von 5 . $10^{17}$ Moleküle/cm$^3$ und am Scheibenrand einen größeren Wert, nämlich $6 \cdot 10^{17}$ Moleküle/cm$^3$ auf.
- Das Ergebnis ist in Fig. 1 dargestellt. Der Einfluß des dort verbleibenden Wasserstoffanstieges am Scheibenrand auf Brechzahlhomogenität und SDB kann aus den obigen Formeln berechnet werden. Er beträgt in diesem Beispiel

$$\Delta n = 0,1 \cdot 1,3 = 0,13 \text{ ppm}$$

$$\Delta SDB = 0,1 \cdot 0,2 = 0,02 \text{ nm/cm.}$$

2. Beispiel

Ein scheibenförmiger Quarzglaskörper mit einem Durchmesser von 48 mm und einer Dicke von 30 mm weist eine zum Rand abfallende Absolutbrechzahl auf. Diese Brechzahlverteilung wird durch eine Temperung unter Wasserstoff im Sinne des Senkens der Brechzahldifferenz von der Mitte zum Rand verbessert und dabei die SDB leicht abgesenkt.

Die Brechzahlhomogenität und die SDB vor und nach der Temperung sind durch die Kurven 1, 2, 3, 4 in Fig. 2 dargestellt. Während sich die SDB gering von ca. 1,2 nm/cm auf 0,8 nm/cm verbesserte, wurde die Brechzahlhomogenität von $\Delta n = 4$ ppm vor der Temperung auf $\Delta n = 1,8$ ppm nach der Temperung verringert, bezogen auf einen Durchmesser von ca. 40 mm.

Bei speziellen Wasserstoffausgangsprofilen kann es nötig sein, Temperungen unter Wasserstoff und an Luft (d.h. Wasserstoffkonzentration an der Blankoberfläche gleich Null ) so zu kombinieren, dass die gewünschten Eigenschaftsverläufe bestmöglich angenähert werden. Die dazu notwendige Reihenfolge der Temperungen und die Prozessparameter können bspw. mit Hilfe der oben angegebenen Gleichungen ermittelt werden.

Diese Erfindung schafft also die Möglichkeit, durch einen oder mehrere nachträgliche Prozessschritte Qualitätsmängel von Quarzglasrundscheiben so zu verbessern, dass diese bestimmte Spezifikationen erfüllen.

**Patentansprüche**

1. Verfahren zur Wasserstoffbeladung von Quarzglaskörpern in einem Temperungsprozess in einem Ofen zur Verbesserung der Brechzahlhomogenität und Laserfestigkeit bei gleichzeitiger Einhaltung einer vorgegebenen Spannungsdoppelbrechung jedes der Quarzglaskörper, **dadurch gekennzeichnet, dass** zunächst die Brechzahlverteilung, die Spannungsdoppelbrechung, die Wasserstoffverteilung und die auszugleichenden Brechzahlunterschiede im Quarzglaskörper bestimmt werden, dass danach die zum Brechzahlausgleich notwendige Wasserstoffveränderung ermittelt wird und dass schließlich die Temperatur und ihre Haltezeit für die Wasserstoffbeladung sowie die Wasserstoffkonzentration und der Wasserstoffdruck im Ofen zu einer hinreichend ausgeglichenen Brechzahlverteilung im Quarzglaskörper eingestellt werden.

2. Verfahren gemäß Anspruch 1, **dadurch gekennzeichnet, dass** der Temperungsprozess bei Wasserstoff- und/ oder bei Luftatmosphäre durchgeführt wird.

3. Verfahren gemäß Anpruch 2, **dadurch gekennzeichnet, dass** der Temperungsprozess bei Wasserstoff- und bei Luftatmosphäre nacheinander durchgeführt wird.

4. Verfahren gemäß Anspruch 1, **dadurch gekennzeichnet, dass** die Temperatur für die Wasserstoffbeladung unter Berücksichtigung der Viskosität des verwendeten Quarzglases zwischen 573 K und 1173 K, vorzugsweise bei 773 K liegt.

5. Verfahren gemäß Anspruch 4, **dadurch gekennzeichnet, dass** die Viskosität des Quarzglases > $10^{14,5}$ dPas ist.

6. Verfahren gemäß Anspruch 1, **dadurch gekennzeichnet, dass** der Wasserstoffdruck P im Ofen $0 < P \leq 20$ bar ist.

7. Verfahren gemäß Anspruch 1, **dadurch gekennzeichnet, dass** die Haltezeit der Temperatur zwischen 10 h und 730 h liegt, wobei diese Haltezeit eine Aufwärm- und Abkühlzeit von 10 h beinhaltet.

8. Verfahren gemäß Anspruch 1, dadurch gekennzeichnt, dass der Ofen innerhalb von 5 h auf 733 K aufgeheizt, bei dieser Temperatur 730 h gehalten und innerhalb von 5 h auf Zimmertemperatur abgekühlt wird, wobei der Ofendruck 1,8 bar beträgt.

9. Scheibenförmiger Quarzglaskörper, der nach mindestens einem der vorstehenden Ansprüche 1 bis 8 hergestellt wurde, **dadurch gekennzeichnet, dass** sein Durchmesser 50 mm bis 350 mm, seine Dicke 10 mm bis 100 mm, seine Wasserstoffkonzentration mindestens 1 . $10^{17}$ Moleküle/$cm^3$, höchstens aber $3 \cdot 10^{18}$ Moleküle/$cm^3$ und seine Spannungsdoppelbrechung $\leq 1$ nm/cm und seine Brechzahlhomogenität $\leq 1$ ppm beträgt.

**Europäisches Patentamt**

## EUROPÄISCHER RECHERCHENBERICHT

Nummer der Anmeldung

EP 02 01 9291

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 033 350 A (HERAEUS QUARZGLAS ;SHINETSU QUARTZ PROD (JP)) 6. September 2000 (2000-09-06) * Ansprüche; Beispiele * | 9 | C03C3/06 C03C23/00 C03B32/00 |
| A | | 1-8 | |
| X | WO 00 39038 A (HERAEUS QUARZGLAS ;FUJINOKI AKIRA (JP); OSHIMA TAKAYUKI (JP); NISH) 6. Juli 2000 (2000-07-06) * Ansprüche; Beispiele * | 9 | |
| A | | 1-8 | |
| P,X | EP 1 233 005 A (HERAEUS QUARZGLAS ;SHINETSU QUARTZ PROD (JP)) 21. August 2002 (2002-08-21) * Ansprüche; Beispiele * | 1,2,4-7, 9 | |
| A | US 6 143 676 A (OHASHI NORIO ET AL) 7. November 2000 (2000-11-07) * Ansprüche; Beispiele * | 1-9 | |
| A | EP 1 061 052 A (ASAHI GLASS CO LTD) 20. Dezember 2000 (2000-12-20) * Ansprüche; Beispiele * | 1-9 | RECHERCHIERTE SACHGEBIETE (Int.Cl.7) C03C C03B |
| A | EP 0 401 845 A (HERAEUS QUARZGLAS ;SHINETSU QUARTZ PROD (JP)) 12. Dezember 1990 (1990-12-12) * Ansprüche; Beispiele * | 1-9 | |

Der vorliegende Recherchenbericht wurde für alle Patentansprüche erstellt

| Recherchenort | Abschlußdatum der Recherche | Prüfer |
|---|---|---|
| DEN HAAG | 17. Dezember 2002 | Van Bommel, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 02 01 9291

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-12-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 1033350 | A | 06-09-2000 | JP | 2000258601 A | 22-09-2000 |
| | | | EP | 1033350 A1 | 06-09-2000 |
| | | | US | 6480518 B1 | 12-11-2002 |
| WO 0039038 | A | 06-07-2000 | JP | 2000191329 A | 11-07-2000 |
| | | | WO | 0039038 A1 | 06-07-2000 |
| EP 1233005 | A | 21-08-2002 | EP | 1233005 A1 | 21-08-2002 |
| | | | JP | 2002316825 A | 31-10-2002 |
| US 6143676 | A | 07-11-2000 | JP | 10324538 A | 08-12-1998 |
| | | | JP | 11060264 A | 02-03-1999 |
| | | | EP | 0917523 A1 | 26-05-1999 |
| | | | WO | 9852879 A1 | 26-11-1998 |
| EP 1061052 | A | 20-12-2000 | EP | 1061052 A1 | 20-12-2000 |
| | | | WO | 9938814 A1 | 05-08-1999 |
| EP 0401845 | A | 12-12-1990 | AT | 116448 T | 15-01-1995 |
| | | | DE | 69015453 D1 | 09-02-1995 |
| | | | DE | 69015453 T2 | 01-06-1995 |
| | | | EP | 0401845 A2 | 12-12-1990 |
| | | | JP | 3088742 A | 15-04-1991 |
| | | | JP | 6053593 B | 20-07-1994 |
| | | | US | 5086352 A | 04-02-1992 |
| | | | US | 5325230 A | 28-06-1994 |
| | | | JP | 3109233 A | 09-05-1991 |
| | | | JP | 6027013 B | 13-04-1994 |
| | | | JP | 3101282 A | 26-04-1991 |
| | | | JP | 6048734 B | 22-06-1994 |
| | | | JP | 1898031 C | 23-01-1995 |
| | | | JP | 3088743 A | 15-04-1991 |
| | | | JP | 6027014 B | 13-04-1994 |

EPO FORM P0461

Für nähere Einzelheiten zu diesem Anhang : siehe Amtsblatt des Europäischen Patentamts, Nr.12/82